# FASCICULE DE BREVET EUROPEEN

(11) **EP 3 061 989 B1**
(45) Date de publication et mention de la délivrance du brevet: **28.06.2017**
(21) Numéro de dépôt: 16156241.8
(22) Date de dépôt: 18.02.2016
(51) Int. Cl.: F16F 15/14, B21D 28/06

(54) **SUPPORT DE PENDULES POUR DISPOSITIF D'AMORTISSEMENT D'UN DISPOSITIF DE TRANSMISSION DE COUPLE**
PENDELHALTERUNG FÜR DÄMPFUNGSVORRICHTUNG EINER VORRICHTUNG ZUR DREHMOMENTÜBERTRAGUNG
PENDULUM SUPPORT FOR DAMPING DEVICE OF A TORQUE-TRANSMISSION DEVICE

(30) Priorité: 24.02.2015 FR 1551556
(43) Date de publication de la demande: 31.08.2016
(73) Titulaire: Valeo Embrayages, 80009 Amiens Cedex 2 (FR)
(72) Inventeur: ROST, Jonathan, 80009 AMIENS (FR)
(74) Mandataire: Cardon, Nicolas

(56) Documents cités:
- WO-A1-2012/175064
- WO-A1-2014/009122
- DE-A1-102009 042 825

## Description

L'invention se rapporte à un support de pendules pour dispositif d'amortissement d'un dispositif de transmission de couple pour véhicule automobile, à de tels dispositifs d'amortissement et de transmission de couple, ainsi qu'à un procédé pour fabriquer un tel support de pendules.

Dans le domaine des véhicules automobiles, il est connu de mettre en oeuvre un dispositif d'amortissement des vibrations en rotation entre un arbre d'entrée d'un dispositif de transmission de couple et un arbre de sortie du dispositif de transmission de couple.

Un exemple connu de tel dispositif d'amortissement consiste en un support supportant des pendules, relié solidaire en rotation avec l'un parmi l'arbre d'entrée et l'arbre de sortie. Les vibrations en rotations de l'arbre d'entrée ou de sortie sont alors lissées par les oscillations des pendules.

Il est connu de réaliser le support sous la forme d'une assiette ou d'une couronne centrale sur laquelle est fixée une seconde couronne radialement extérieure, les pendules étant solidarisés à cette couronne radialement extérieure. Une telle configuration du support permet en effet une plus grande souplesse de montage du dispositif d'amortissement dans le dispositif de transmission de couple. Une telle configuration permet également d'obtenir une position des pendules radialement la plus éloignée possible de l'axe de rotation du support, ce qui permet d'optimiser l'efficacité du dispositif d'amortissement.

Ainsi, il est par exemple connu de la demande WO 2012/175064 un support formé par une couronne centrale avec des pattes s'étendant radialement vers l'extérieur, et une couronne radialement extérieure, la couronne centrale étant fixée sur la couronne radialement extérieurement au moyen de rivets au niveau des extrémités libres des pattes. Il est à noter ici que les pattes s'étendent également selon la direction axiale des deux couronnes, permettant ainsi de décaler axialement la couronne centrale par rapport à la couronne radialement extérieure.

DE-A-10 2009 042 825 décrit par ailleurs un support formé de deux couronnes coaxiales, la couronne radialement extérieure présentant une portion radialement interne emboutie, au niveau de laquelle les deux couronnes sont fixées au moyen de rivets, de telle sorte que la couronne centrale est décalée axialement par rapport aux pendules.

Enfin, il est connu de DE-A-10 2012 214 996, un support formé d'une assiette centrale et d'une couronne radialement extérieure sur laquelle sont fixés des pendules. L'assiette comporte des ergots s'entendant radialement vers l'extérieur. La couronne comporte des ergots s'étendant radialement vers l'intérieur. La couronne est fixée sur l'assiette au moyen d'éléments de liaison fixés sur les ergots de l'assiette et de la couronne, qui permettent une rotation de la couronne par rapport à l'assiette centrale, autour d'axes perpendiculaires à l'axe de rotation du support.

Ces supports de pendules pour dispositif d'amortissement pour dispositif de transmission de couple pour véhicule automobile présentent une complexité de fabrication et de montage relativement importante, de sorte qu'ils ont un coût élevé.

Le but de l'invention est de proposer un support pour dispositif d'amortissement ne présentant pas les inconvénients susmentionnés, ainsi qu'un procédé pour fabriquer un tel support.

À cette fin, l'invention propose un procédé de fabrication d'un support de pendules pour dispositif d'amortissement de dispositif de transmission de couple pour véhicule automobile, comprenant les étapes consistant à :
a) fournir une plaque,
b) découper dans la plaque une forme sensiblement de couronne,
c) récupérer la découpe intérieure de la couronne, sensiblement en forme de disque ou d'anneau,
d) déformer le disque ou l'anneau de manière qu'il présente un renfoncement central et une collerette périphérique sensiblement plane, décalée axialement par rapport au renfoncement, et
e) fixer la couronne sur la collerette.

Ainsi, de manière avantageuse, la pièce centrale du support de pendules est formée, au moins en partie, par la découpe centrale réalisée, par exemple dans une tôle métallique, pour former la couronne radialement extérieure. La découpe centrale, qui était jusqu'ici jetée, est dorénavant utilisée. Les pertes en matériaux sont ainsi nettement réduites, ce qui induit une réduction du coût de fabrication d'un support de pendules pour dispositif d'amortissement.

Selon des modes de réalisation préférés, le procédé selon l'invention peut présenter une ou plusieurs des caractéristiques suivantes, prises seules ou en combinaison :
- à l'étape b), la découpe est réalisée de manière à obtenir une forme de couronne avec des pattes s'étendant radialement vers l'intérieur de la couronne,
- à l'étape c), la découpe intérieure de la couronne présente une forme de disque avec des encoches, et
- à l'étape e), la couronne est fixée sur la collerette au niveau des pattes. Pour cela il peut être prévu une mise en rotation de la couronne par rapport au disque de telle sorte à décaler les encoches du disque par rapport aux pattes de la couronne.
- à l'épate a), on utilise une plaque métallique. Mais la plaque pourrait être en matériau plastique.
- réaliser des trous dans les pattes de la couronne et dans la découpe intérieure de la couronne. La couronne est mise en rotation par rapport au disque de manière à permettre une mise en relation des trous de chacune des pattes en regard des trous de la découpe intérieure de la couronne. Les trous respectivement formés dans la couronne et dans la collerette sont superposés. Ceci est réalisé en faisant tourner la couronne et le disque relativement l'une par rapport à l'autre de telle sorte à ce que les pattes de la couronne se retrouvent superposées sur le disque entre deux encoches consécutives. Puis on fixe la couronne sur le disque.
- à l'étape e), la couronne est fixée sur la collerette au moyen de rivets. Il peut être prévu d'autres moyens de fixation tels que des rivets intégrés à la couronne et/ou à la collerette, ou bien tels que des vis.
- entre les étapes b) et e), une étape de traitement thermique de la couronne.

Selon d'autres aspects, l'invention propose un support de pendules obtenu en mettant en oeuvre un procédé selon l'une quelconque des caractéristiques précédentes.

Il peut être prévu que la couronne et le disque ou l'anneau ont sensiblement la même épaisseur.

Selon d'autres aspects, l'invention propose également un dispositif d'amortissement comprenant un support de pendules tel que décrit précédemment, et un ou plusieurs pendules fixés sur le support de pendules de manière à pouvoir osciller.

Selon d'autres aspects, l'invention propose aussi un dispositif de transmission de couple pour véhicule automobile comportant un dispositif d'amortissement tel que décrit précédemment.

Le dispositif de transmission de couple peut comprendre en outre un double volant amortisseur couplé au dispositif d'amortissement.

L'invention sera mieux comprise à la lumière de la description qui va suivre, description faite en référence aux dessins annexés, parmi lesquels :
- la figure 1 représente schématiquement une tôle métallique découpée ;
- les figures 2 et 3 représentent schématiquement des pièces découpées dans la tôle métallique de la figure 1 ;
- la figure 4 illustre schématiquement la fixation des pièces des figures 2 et 3 ensemble pour former un support de pendules pour dispositif d'amortissement de dispositif de transmission de couple pour véhicule automobile ;
- la figure 5 représente schématiquement en coupe, la section du support de pendules de la figure 4 ;
- la figure 6 représente schématiquement en coupe, un dispositif d'amortissement de dispositif de transmission de couple incluant le support de pendules des figures 4 et 5 ; et
- la figure 7 représente schématiquement en coupe une demi-section d'un dispositif de transmission de couple pour véhicule automobile incluant le dispositif d'amortissement de la figure 6.

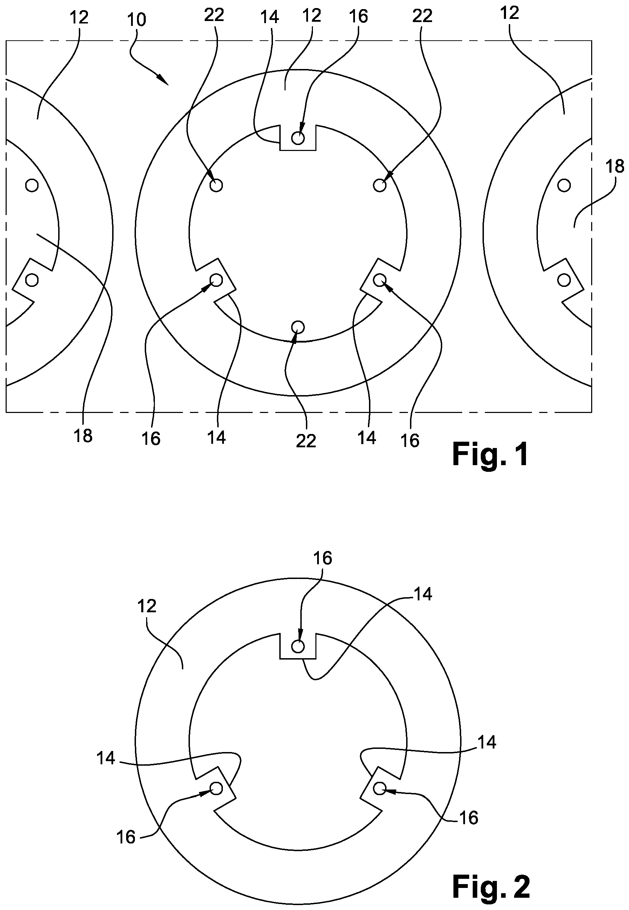

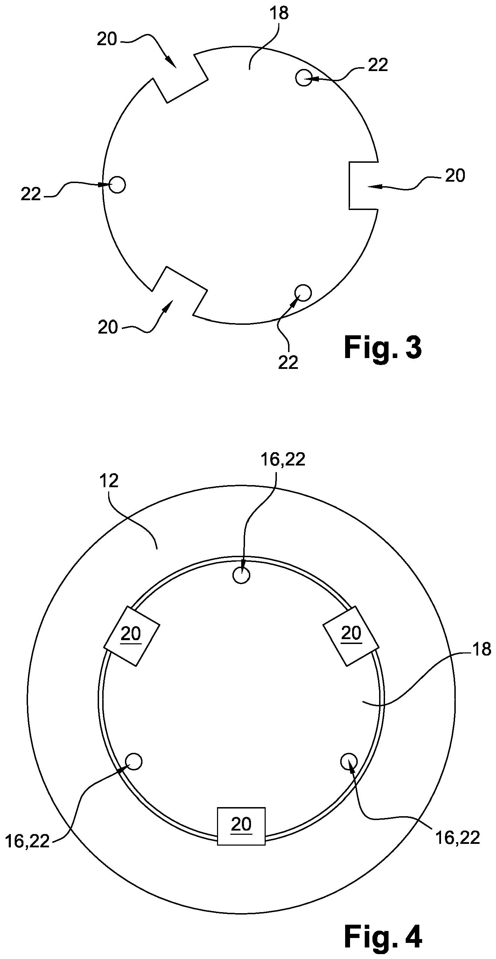

On décrit tout d'abord, en regard des figures 1 à 6, un procédé de fabrication d'un dispositif d'amortissement à pendules, pour dispositif de transmission de couple pour véhicule automobile.

Le procédé débute par une première étape a) de fourniture d'une tôle métallique 10.

Dans une deuxième étape b), la tôle métallique 10 est découpée comme cela est illustré sur la figure 1. La découpe réalisée permet de former une ou plusieurs couronnes 12. Chaque couronne 12 comporte des pattes 14 ou languettes, ici au nombre de trois, s'étendant radialement vers l'intérieur. Les pattes 14 sont ici équiréparties angulairement. Sensiblement au milieu des pattes 14, celles-ci sont percées d'un trou 16.

Cependant, la découpe de la couronne 12 permet de former, au centre de chaque couronne 12, une pièce 18 en forme d'assiette circulaire avec des encoches 20, complémentaires des pattes 14. Des trous 22 sont réalisés dans l'assiette 18, ici au nombre de trois. Les trous 22 sont équirépartis angulairement. Les trous 22 sont disposés ici de telle sorte que l'ensemble des trous 16, 22 soient équirépartis angulairement.

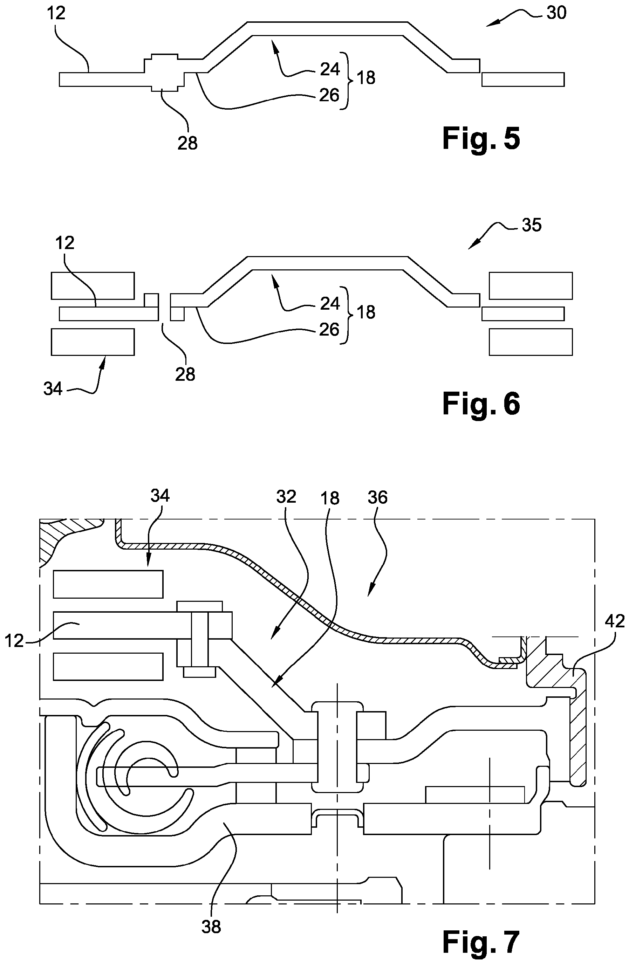

Ensuite, l'assiette 18 est récupérée, à une étape c), puis, à une étape d), elle est déformée, par exemple par emboutissage, pour présenter, comme illustrée à la figure 5, un renfoncement 24 central et une collerette périphérique 26, sensiblement plane, décalée axialement par rapport au renfoncement 24. La collerette périphérique 26 est ici formée par trois secteurs angulaires identiques d'un même anneau. En variante cependant, la collerette périphérique 26 peut n'être formée que par des surfaces portées par des languettes s'étendant radialement vers l'extérieur et axialement depuis le renfoncement central.

En parallèle, la couronne 12 peut être soumise à une étape de traitement thermique. Cette étape permet d'assurer la durée de vie de la couronne 12. Il est à noter ici que ce traitement thermique n'est appliqué que sur la couronne 12, plane, ce qui est nettement plus aisé que sur des pièces présentant un renfoncement ou un relief axial. En outre, il n'apparait pas nécessaire à priori d'appliquer un tel traitement thermique sur l'assiette 18, seule la couronne 12 étant soumise à des contraintes mécaniques importantes en utilisation.

Enfin, à une étape e), on superpose les trous 16, 22 respectivement formés dans la couronne 12 et dans la collerette 26. Ceci est réalisé en faisant tourner la couronne et le disque relativement l'une par rapport à l'autre de telle sorte à ce que les pattes 14 de la couronne 12 se retrouvent superposées sur la pièce 18 entre deux encoches 20 consécutives de la pièce 18. La couronne 12 est ensuite fixée sur l'assiette 18 au moyen de rivets 28, pour former un support de pendules 30 pour dispositif d'amortissement. Le support de pendules 30 ainsi obtenu présente de préférence une couronne 12 et une assiette 18 d'épaisseurs égales, puisque ces deux pièces sont obtenues d'une même tôle d'acier initiale. En variante cependant, l'assiette 18 et la couronne 12 présentent des épaisseurs différentes, notamment dans le cas où l'une des deux pièces a subi un traitement de surface.

Un dispositif d'amortissement 32, tel qu'illustré en figure 6, est alors obtenu en fixant des pendules 34 sur le support de pendules 30 de la figure 5. De tels pendules 34 comportent généralement deux masselottes s'étendant de part et d'autre de la couronne 12, et reliées entre elles par un rivet guidé dans un chemin creusé dans la couronne 12 et permettant des oscillations des pendules 34 en cas de variations de couple.

Le dispositif d'amortissement 32 de la figure 6 peut notamment être mis en oeuvre dans un dispositif de transmission de couple 36 pour véhicule automobile tel que partiellement illustré à la figure 7. Le dispositif de transmission de couple 36 présente ici, en plus du dispositif d'amortissement 32, un double volant amortisseur 38, couplé par tout moyen approprié au dispositif d'amortissement 32, lequel dispositif d'amortissement 32 est relié à un arbre ou moyeu de sortie 42 du dispositif de transmission de couple 36. Le dispositif de transmission de couple 36 peut notamment être un dispositif d'embrayage pour véhicule automobile, comprenant un mécanisme d'embrayage pour sélectivement mettre en prise un disque de friction entre un plateau de pression et un volant moteur, et le dispositif d'amortissement 32 couplé à un moyeu de sortie 42 du dispositif d'embrayage. Le dispositif d'amortissement 32 est notamment disposé fonctionnellement entre le disque de friction et le moyeu de sortie. Le double volant amortisseur 38 peut être disposé fonctionnellement entre le disque de friction et le dispositif d'amortissement 32.

L'invention ne se limite pas au seul exemple décrit ci-avant en regard des figures, mais elle est susceptible de nombreuses variantes accessibles à l'homme de l'art.

Dans l'exemple, la partie centrale de la découpe présente une forme d'assiette pleine circulaire. En variante, la découpe centrale peut présenter une forme de couronne également, avec un trou central, notamment pour être reliée à un moyeu. L'assiette ou la couronne obtenue par la découpe, peut en outre subir des découpes ultérieures et ne plus présenter finalement une forme complémentaire de la couronne radialement extérieure.

En variante, les pattes peuvent être formées par l'assiette 18 en s'étendant radialement vers l'extérieur et les encoches peuvent être formées par la couronne 12.

Par ailleurs, les trous dans la couronne 12 et/ou dans l'assiette 18 peuvent être réalisés avant la découpe, en même temps que la découpe ou après la découpe.

L'assiette 18, dans l'exemple décrit, a une forme de disque. Cependant, elle peut présenter une forme de couronne également, c'est-à-dire qu'elle présente un trou central, qui peut notamment être destiné à être relié à un arbre de sortie d'un dispositif de transmission de couple dans lequel est monté le dispositif d'amortissement 32.

L'assiette ou couronne 18 Il est à noter également que l'assiette 18 peut subir des découpes ultérieurement à la découpe de la couronne 12.

Enfin, le dispositif d'amortissement à pendule peut être mis en oeuvre dans tout dispositif de transmission de couple, notamment pour véhicule automobile, en combinaison avec un double volant amortisseur ou sans.

## Revendications

1. Procédé de fabrication d'un support de pendules (30) pour dispositif d'amortissement (32) de dispositif de transmission de couple (36) pour véhicule automobile, comprenant les étapes consistant à :
a) fournir une plaque (10),
b) découper dans la plaque une forme sensiblement de couronne (12),
c) récupérer la découpe intérieure de la couronne (12), sensiblement en forme de disque (18) ou d'anneau,
d) déformer le disque (18) ou l'anneau, par exemple par emboutissage, de manière qu'il présente un renfoncement central (24) et une collerette (26) périphérique sensiblement plane, décalée axialement par rapport au renfoncement (24), et
e) fixer la couronne (12) sur la collerette (26).

2. Procédé selon la revendication 1, dans lequel :
- à l'étape b), la découpe est réalisée de manière à obtenir une forme de couronne (12) avec des pattes (14) s'étendant radialement vers l'intérieur de la couronne (12),
- à l'étape c), la découpe intérieure de la couronne (12) présente une forme de disque (18) avec des encoches (20), et
- à l'étape e), la couronne (12) est fixée sur la collerette (26) au niveau des pattes (14).

3. Procédé selon la revendication 2, comprenant une étape consistant à réaliser des trous (16,22) dans les pattes (14) de la couronne (12) et dans la découpe intérieure de la couronne (12).

4. Procédé selon l'une des revendications 1 à 3, dans lequel à l'étape a), la plaque est une plaque métallique.

5. Procédé selon l'une des revendications 1 à 4, dans lequel à l'étape e), la couronne (12) est fixée sur la collerette (26) au moyen de rivets (28).

6. Procédé selon l'une quelconque des revendications précédentes, comprenant entre les étapes b) et e), une étape de traitement thermique de la couronne (12).

7. Support de pendules obtenu en mettant en oeuvre un procédé selon l'une quelconque des revendications précédentes.

8. Support de pendules selon la revendication 7, dans lequel la couronne (12) et le disque (18) ou l'anneau ont sensiblement la même épaisseur.

9. Dispositif d'amortissement comprenant un support de pendules (30) selon la revendication 7 ou 8, et un ou plusieurs pendules (34) fixées sur le support de pendules (30) de manière à pouvoir osciller.

10. Dispositif de transmission de couple pour véhicule automobile comportant un dispositif d'amortissement (32) selon la revendication 9.

11. Dispositif de transmission de couple selon la revendication 10, comprenant en outre un double volant amortisseur couplé au dispositif d'amortissement (32).

## Patentansprüche

1. Verfahren zur Herstellung einer Pendelhalterung (30) für eine Dämpfungsvorrichtung (32) einer Vorrichtung zur Drehmomentübertragung (36) für ein Kraftfahrzeug, welches die Schritte umfasst, die in Folgendem bestehen:
a) Bereitstellen einer Platte (10),
b) Ausstanzen einer Form aus der Platte, die im Wesentlichen die eines Kranzes (12) ist,
c) Wiederverwenden des ausgestanzten Innenteils des Kranzes (12), das im Wesentlichen die Form einer Scheibe (18) oder eines Ringes hat,
d) Verformen der Scheibe (18) oder des Ringes, zum Beispiel durch Tiefziehen, derart, dass sie bzw. er eine zentrale Vertiefung (24) und einen im Wesentlichen ebenen Umfangsflansch (26), der axial bezüglich der Vertiefung (24) versetzt ist, aufweist, und
e) Befestigen des Kranzes (12) an dem Flansch (26).

2. Verfahren nach Anspruch 1, wobei:
- in Schritt b) der Stanzvorgang derart ausgeführt wird, dass eine Form eines Kranzes (12) mit Lappen (14), die sich radial zum Inneren des Kranzes (12) hin erstrecken, erhalten wird,
- in Schritt c) das ausgestanzte Innenteil des Kranzes (12) eine Form einer Scheibe (18) mit Aussparungen (20) aufweist, und
- in Schritt e) der Kranz (12) an den Lappen (14) am Flansch (26) befestigt wird.

3. Verfahren nach Anspruch 2, welches einen Schritt umfasst, der darin besteht, Löcher (16, 22) in den Lappen (14) des Kranzes (12) und in dem ausgestanzten Innenteil des Kranzes (12) herzustellen.

4. Verfahren nach einem der Ansprüche 1 bis 3, wobei in Schritt a) die Platte eine Metallplatte ist.

5. Verfahren nach einem der Ansprüche 1 bis 4, wobei in Schritt e) der Kranz (12) mittels Nieten (28) an dem Flansch (26) befestigt ist.

6. Verfahren nach einem der vorhergehenden Ansprüche, welches zwischen den Schritten b) und e) einen Schritt der Wärmebehandlung des Kranzes (12) umfasst.

7. Pendelhalterung, welche erhalten wird, indem ein Verfahren nach einem der vorhergehenden Ansprüche durchgeführt wird.

8. Pendelhalterung nach Anspruch 7, wobei der Kranz (12) und die Scheibe (18) oder der Ring im Wesentlichen dieselbe Dicke aufweisen.

9. Dämpfungsvorrichtung, welche eine Pendelhalterung (30) nach Anspruch 7 oder 8 und ein oder mehrere Pendelmassen (34), die an der Pendelhalterung (30) derart befestigt sind, dass sie schwingen können, umfasst.

10. Vorrichtung zur Drehmomentübertragung für ein Kraftfahrzeug, welche eine Dämpfungsvorrichtung (32) nach Anspruch 9 aufweist.

11. Vorrichtung zur Drehmomentübertragung nach Anspruch 10, welche außerdem ein Zweimassenschwungrad umfasst, das mit der Dämpfungsvorrichtung (32) gekoppelt ist.

## Claims

1. Method for manufacturing a pendulum support (30) for a damping device (32) of a torque transmission device (36) for a motor vehicle, said method comprising the steps as follows:
a) supply a plate (10),
b) cut out the substantial form of a crown (12) from the plate,
c) recover the internal cut-out-portion of the crown (12), substantially in the form of a disk (18) or ring,
d) deform the disk (18) or the ring, for example by means of stamping, so that it has a central recess (24) and a peripheral flange (26) which is substantially planar and axially offset with respect to the recess (24), and
e) fix the crown (12) on the flange (26).

2. Method according to Claim 1, in which:
- at step b), the cut-out-portion is realized so as to obtain the form of a crown (12) with tabs (14) which extend radially toward the interior of the crown (12),
- at step c), the internal cut-out-portion of the crown (12) is in the form of a disk (18) with notches (20), and
- at step e), the crown (12) is fixed on the flange (26) at the tabs (14).

3. Method according to Claim 2, comprising a step consisting in realizing holes (16, 22) in the tabs (14) of the crown (12) and in the internal cut-out-portion of the crown (12).

4. Method according to one of Claims 1 to 3, in which at step a), the plate is a metal plate.

5. Method according to one of Claims 1 to 4, in which at step e), the crown (12) is fixed on the flange (26) by means of rivets (28).

6. Method according to any one of the preceding Claims, comprising between the steps b) and e), a step for thermally treating the crown (12).

7. Pendulum support obtained by implementing a method according to any one of the preceding claims.

8. Pendulum support according to Claim 7, in which the crown (12) and the disk (18) or the ring are substantially of the same thickness.

9. Damping device comprising a pendulum support (30) according to Claim 7 or 8, and one or several pendulums (34) which are fixed on the pendulum support (30) so as to be able to oscillate.

10. Torque transmission device for a motor vehicle comprising a damping device (32) according to Claim 9.

11. Torque transmission device according to Claim 10, furthermore comprising a dual mass flywheel which is coupled to the damping device (32).
